Europäisches Patentamt

European Patent Office

Office européen des brevets

(19)

(11) Veröffentlichungsnummer: **0 067 979**
**A1**

(12) # EUROPÄISCHE PATENTANMELDUNG

(21) Anmeldenummer: 82104760.2

(22) Anmeldetag: 29.05.82

(51) Int. Cl.³: **F 24 F 11/00**
**A 01 K 1/00**

(30) Priorität. 20.06.81 DE 3124334

(43) Veröffentlichungstag der Anmeldung:
29.12.82 Patentblatt 82/52

(84) Benannte Vertragsstaaten:
FR GB NL

(71) Anmelder: Hölscher & Leuschner GmbH & Co.
Siemensstrasse 15
D-4448 Emsbüren(DE)

(72) Erfinder: Leuschner, Peter, Dipl.-Ing.
Langen Strasse 2
D-4448 Emsbüren(DE)

(74) Vertreter: Busse & Busse Patentanwälte
Postfach 1226 Grosshandelsring 6
D-4500 Osnabrück(DE)

(54) Stallklimaanlage.

(57) Eine Stallklimaanlage mit mehreren Meßwertgebern (12, 13, 14, 15, 16) für verschiedene Klima-Meßgrößen, mehreren verschiedenartige Stellgrößen liefernden Stellgliedern (9, 10, 11) und zumindest einen Regler (17) für die meßgrößenabhängige Stellglied-Aussteuerung, wie sie beispielsweise herkömmlich für Fest- und Grenzwertregelungen einzelner Klimawerte bekannt ist, wird im Sinne einer das von verschiedenen Klimagrößen abhängige Wohlbefinden der Tiere besser berücksichtigenden Regelung dahingehend vervollkommnet, daß mehrere verschiedene Klima-Meßgrößen zu dem bzw. zumindest einem der Regler zusammengeführt und in diesem zur Bildung zumindest eines kombinierten Klimawertes verknupft sind, aufgrund dessen der Regler verschiedene Stellsignale an die Stellglieder ausgibt Die Klima-Meßgrößen können neben der Stallufttemperatur auch Wandtemperaturen, die Stalluftfeuchte, die Ionenkonzentration in der Stalluft und oder Licht- oder elektrische Strahlung erfassen und durch weitere Meß- oder Eingabewerte wie etwa für den Besatz des Stalles typische Werte beeinflußt werden.

Fig. 1

EP 0 067 979 A1

- 1 -

## Stallklimaanlage

Die Erfindung betrifft eine Stallklimaanlage mit mehreren Meßwertgebern für verschiedene Klima-Meßgrößen, mehreren verschiedenartige Stellgrößen liefernden Stellgliedern und zumindest einem Regler für die meßgrößenabhängige Stellglied-Aussteuerung.

Stallklimaanlagen dieser Art sind in der Form bekannt, daß fest vorgegebene bzw. von Hand zu verstellende Sollwerte einzelner Regelgrößen wie etwa der Feuchtigkeit oder der Stallufttemperatur maßgeblich vorgegeben werden, um anhand dieser eine genaue Festwertregelung durchzuführen, solange nicht sonstige Größen über kritische Grenzwerte hinausgehen. So wird z. B. die Stallufttemperatur mit Hilfe der Lüftung, ggf. auch Heizung solange auf einen fest vorgegebenen Temperaturwert geregelt, solange nicht bei der Stalluftfeuchte eine Grenzwertüberschreitung eintritt, die dann ihrerseits wieder eine entsprechende Regelung auslöst.

Solche Regelungen nach jeweils einem als maßgeblich vorgegebenen, bzw. gerade kritisch auftretenden Wert sind jedoch unvollkommen, da das angestrebte Wohlbefinden des Tieres durchaus von einer Vielzahl von Einflußgrößen abhängt. So ist beispielsweise das Wärmeempfinden keineswegs durch die Stallufttemperatur allein festgelegt, vielmehr sind weitere Einflußgrößen mit der Wärmestrahlung der raumumschließenden Wände, mit der Luftfeuchtigkeit, der Luftbewegung und anderem gegeben. Nachdem es nicht umstritten ist, daß das Klima in einem Stall für das Wohlbefinden, die Gesundheit und die Leistungsfähigkeit des Stalltieres einen überaus kritischen
Faktor darstellt, ergibt sich als Aufgabe der Erfindung eine Stallklimaanlage tiergerechterer und damit
besserer Auslegung zu schaffen.

Gemäß der Erfindung wird diese Aufgabe von einer Stallklimaanlage der eingangs bezeichneten Art ausgehend
dadurch gelöst, daß mehrere verschiedene Klima-Meßgrößen zu dem bzw. zumindest einem der Regler zusammengeführt und in diesem zur Bildung zumindest
eines kombinierten Klimawertes verknüpft sind, aufgrund
dessen der Regler verschiedene Stellsignale an die
Stellglieder ausgibt.

Gemäß der Erfindung ist damit vorgesehen, jeweils mehrere,
vorzugsweise die für das Klimaempfinden des Tieres wichtigsten Klima-Meßgrößen zu erfassen und zu einem kombinierten Wert zu verknüpfen, anhand dessen die Stellglieder ausgesteuert werden. So wird in der Regel vorzusehen sein, daß die Stallufttemperatur und die Temperatur der Stallinnenwand gemessen und - ihrem Einfluß entsprechend gewichtet - miteinander verknüpft werden, um
einen empfindensgerechteren Temperaturwert zu erhalten.
Ferner wird ein Feuchtegeber für die Stalluftfeuchte
heranzuziehen sein, um nicht nur kritische Feuchtewerte
zu signalisieren, sondern generell einen Beitrag zur
Klimabestimmung zu leisten,wobei z. B. in erster
Näherung schon eine rein additive Zugabe eines zu einem
kombinierten Temperaturwert eine gute Näherung für die
komplexen Zusammenhänge erzielen kann.

Es versteht sich, daß dieses Grundkonzept in vielerlei
Hinsicht abgewandelt und verfeinert werden kann, indem
eine Vielzahl von Einflußgrößen mit Wirkung auf das Klimaempfinden und auf das sonstige, mittels des Stallklimas beeinflußbare Wohlbefinden des Tieres durch jeweils ansich bekannte Meßwertgeber ermittelt, in Form eines Meßwertes dem Regler zugeführt und mit anderen Meßwerten
verbunden wird. So sind an Einflußgrößen im Stall noch
der Luftdruck, das Licht, der Geräuschpegel, der Schadgasanteil, der Ionengehalt der Luft, aber auch die Uhrzeit, der Tagesrhythmus oder sonstige halterungsspezifische Einflüsse wie Fütterungen usw. für das Klima berücksichtigbar, und zwar mit grundsätzlich bekannten
Meßwertgebern und unter gemeinsamer, überlagernder Eingabe der Meßwerte in einen Regler.

Für die Regelung können weiterhin tierphysiologische Meßwerte ermittelt und ausgewertet werden, wie etwa die
Licht- und Wärmestrahlung der Tiere, die Feuchtigkeitsabgabe durch Atmung oder Schwitzen, die Schadgasabgabe
oder auch die Urin- und Kotabgabe. Anhand dieser Werte
lassen sich direkte Schlüsse über das Wohlbefinden des
Tieres ableiten, die auch dementsprechend zur direkten
Beeinflussung der Regelung geeignet sind. Schließlich
lassen sich sogar tiersoziologische Meßwerte durch geeignete Überwachungen ermitteln und zur Klimaregelung heranziehen. So ist der Klimabedarf der Tiere, jeweils unterschiedlich anzusetzen, ob diese ruhig stehen oder liegen
oder aber laufen bzw. ob sie Gruppen bilden oder aber
sich einzeln halten.

Neben den vorgenannten, variablen Größen sind bei der
Klimaregelung auch stationäre Werte zu berücksichtigen,
zu denen einerseits unveränderliche Werte wie etwa die
Außenfläche, die Wärmedurchgangszahlen von Wand und Decke,
das Raumvolumen usw. zu rechnen sind. Insbesondere aber
ist es wichtig, die Klimaregelung in Anpassung an den
jeweiligen Tierbesatz, insbesondere an das Gewicht, das
Alter, das Geschlecht der Tiere und natürlich auch an
deren Rasse und Zahl einzustellen. Dieses soll mit der erfindungsgemäßen Klimaanlage durch ein besonderes Eingabegerät mit Bedieneinrichtungen vorgesehen werden, die dann geräteintern eine Umsetzung in entsprechend gewichtete Einflußgrößen auslösen.

Die nach der Erfindung vorgesehene komplexere Verknüpfung einflußreicher Klimagrößen schafft aber auch eine Überwachung, die ein vollständigers Bild vom Stall ergibt, so daß es gleichzeitig möglich wird, die maßgeblichen Daten jeweils vom Stall zu einem mehr oder weniger ferngelegenen Wohnhaus zu übertragen und damit eine bequeme und wirksame Überwachung des Stalls zu ermöglichen.

Weitere Merkmale und Vorteile der Erfindung ergeben sich aus den Ansprüchen und der nachfolgenden Beschreibung, in der ein Ausführungsbeispiel des Gegenstands der Erfindung anhand einer Zeichnung näher erläutert ist.

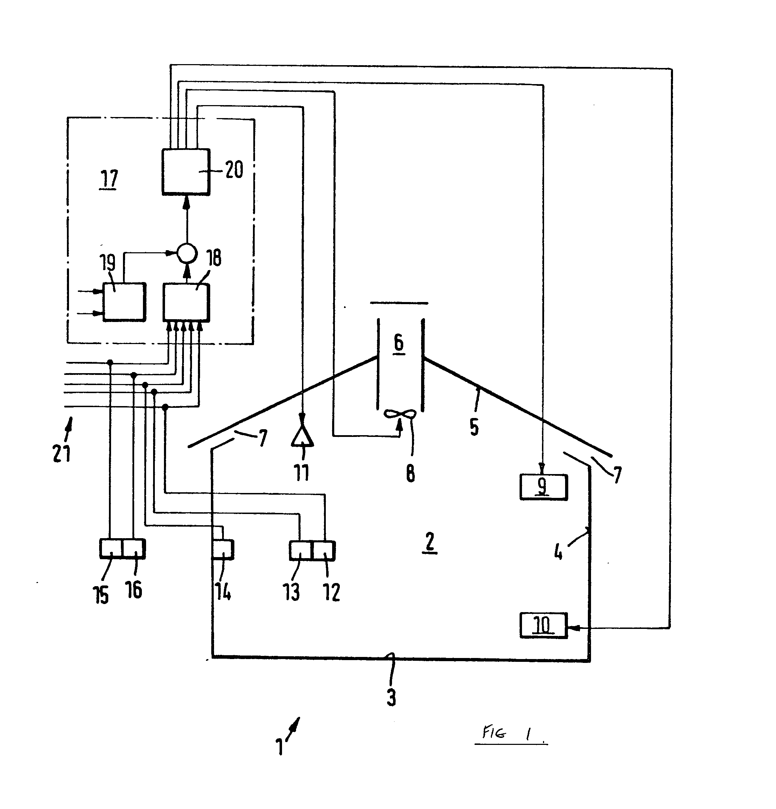

Die einzige Figur der Zeichnung zeigt in rein schematischer Form ein Stallgebäude mit Regeleinrichtungen.

Ein insgesamt mit 1 bezeichnetes Stallgebäude weist einen Stallinnenraum 2 mit Boden 3, Wänden 4 und Decken 5 auf, wobei letztere mit einem Abluftzug 6 und mit Zuluftöffnungen 7 verbunden sind. Der Abluftzug 6 enthält einen Ventilator 8. Ferner sind zur Klimabeeinflussung im Stallraum 2 eine Heizung 9, eine Kühlung 10 und eine Luftbefeuchtung 11 vorgesehen.

Es versteht sich, daß eine solche Vielzahl von Stelleinrichtungen nicht in jedem Fall vorliegen muß, vielmehr häufig weniger, bisweilen sogar nur eine Stelleinrichtung, wie etwa der Ventilator 8, ausreicht, das Klima wirksam zu beeinflussen. Wichtig ist dabei aber insbesondere, daß der mit der Klimaregelung erzielte Zustand bei den Tieren im Stall Wohlbefinden schafft und dieser Zustand hängt in der Regel von vielen Größen, insbesondere mehrerer klimatischen Meßwerten und sonstigen, mehr stationären Daten ab.

Hierzu sind in dem Stall ein Temperaturgeber 12 und ein Feuchtegeber 13 für die Stalluft, ferner ein Temperaturgeber 14 für die Stallinnenwand angeordnet. Außerhalb des Stalls ist für die Klimaregelung ein Temperaturgeber 15 und ein Feuchtegeber 16 für die Außenluft vorgesehen. Alle diese Werte werden einem mit strichpunktierten Linien umrissenen Regler 17 zugeführt, der hier der Anschaulichkeit halber aus einem Istwertformer 18, einem Sollwertformer 19 und einem Steuerteil 20 bestehend dargestellt ist.

Im Istwertformer 18 laufen die Signale der vorgenannten Meßwertgeber zusammen und werden ihrem Einfluß auf das Wohlbefinden des Tieres bzw. ihrem Einfluß auf die Klimaverstellungen entsprechend gemischt. So wird die Stallufttemperatur von dem Temperaturwert für die Stallinnenwand so überlagert, daß der resultierende Wert der tierseitig empfundenen Überlagerung von Konvektion und Strahlung im Stall entspricht. Weiterhin wird die Stalluftfeuchte von dem Meßwertgeber 13 den anderen Werten so überlagert, daß eine höhere Feuchte einem höheren Temperaturwert entspricht. Ferner werden die Außentemperatur- und Außenluftfeuchtewerte eingeführt, um den Einfluß auf das Wohlbefinden auch von diesen aus zu berücksichtigen und auch, um das dynamische Verhalten der Regelkreise zu beeinflussen, wenn z. B. eine Frischluftanforderung gleichzeitig die Einschaltung der relativ trägen Heizung verlangt. Damit wird ein dem Wärmeempfinden der Tiere im Stall angepaßter Kombinationswert erstellt.

Der Sollwertformer 19 besteht typischerweise aus einer Eingabeeinrichtung wie etwa einer Bedien- oder Schalttafel, und einer nachfolgenden Auswerteeinheit, mit der ein im allgemeinen aus mehreren Größen kombinierter Klima-Sollwert ermittelt wird. Typische Beispiele dieser Eingabe sind Zahlen über das Gewicht, die Rasse und das Geschlecht der Tiere aus denen der Sollwertformer dann mittels vorgegebener Basiswerte und Korrekturfaktoren einen speziellen Sollwert ermittelt. Die Differenz zwischen so gebildetem Sollwert und dem zuvor betrachteten Istwert wird als Pegelgröße in der üblichen Weise in den Regelkreis eingegeben. Dabei bleibt lediglich anzumerken, daß bei der wechselseitigen Überlagerung von Regelkreisgrößen insbesondere die Eingabe von Größen mit einer relativ kleinen Wichtung grundsätzlich auf der Sollwert- wie auf der Istwertseite erfolgen kann, da es für den Regelkreis schließlich nur auf die Regelabweichung ankommt. Bei vorzeichengerechter Eingabe können also zusätzlich berücksichtigte Werte sowohl auf der Soll- wie auf der Istseite eingegeben werden.

Solche gerätetechnische Fragen verlieren an Bedeutung allerdings dann, wenn man den gesamten Regler mit Hilfe eines Digitalrechners realisiert, in den Meßwerte und Eingabewerte - bedarfsweise über Analog/Digital-Wandler - in digitaler Form hineingelangen und dort mit Hilfe zyklisch abgerufener Rechenverfahren verarbeitet werden.

Die Regelabweichung wird im Steuerteil 20 weiter verarbeitet, insbesondere zur Bildung verschiedener Stellgrößen für verschiedene Stellglieder in statischer und auch dynamischer Form ausgewertet, damit eine Klimaverstellung in abgestimmter schonender Weise erfolgt und nicht etwa ein Kaltlufteinfall erst nachträglich durch verzögert einsetzende Heizung entschärft werden muß.

Ersichtlich sind die aus der Zeichnung entnommenen Meßgrößen nur bestimmte, willkürlich vorgegebene, wenn auch besonders bedeutsame Werte. Es ist aber durchaus möglich, noch mit anderen Werten in die Klimaregelung einzugreifen und beispielsweise von der Geräuschentwicklung her zusätzliche Signale in die Regelung einfließen zu lassen. Neben der Regelung auf einen optimalen Wert ist es dabei auch von Interesse, in ansich nur subsidiär herangezogenen Meßgrößen bestimmte Grenzwerte vorzugeben und im Falle einer Überschreitung mit Reaktionen zu beantworten. Wenn etwa die "Umweltbedingungen" hinsichtlich Schadstoffgehalt der Luft, Geräuschen oder Lichteinfall in irgendeiner speziellen Hinsicht kritisch werden, kann mit Hilfe einer hier vorgesehenen komplexeren Überwachung eine Reaktion der Klimaanlage und/oder ein Alarm vorgegeben werden.

Die komplexe Überwachung schafft auch die Möglichkeit, eine Mehrzahl von Meßgrößen über ein in der Zeichnung mit 21 bezeichnetes Kabel parallel aus dem Stall heraus fernzuübertragen, um in Zentralen, Büros oder Wohnhäusern durch ein vervollständigtes, komplexes Signalbild eine brauchbare Überwachung zu erhalten.

Der erfindungsgemäßen Klimaanlage ergeben sich verschiedene Vorteile, die zunächst aufgrund des optimierten Klimas in besserer Gesundheit, weniger Ausfällen und größerer Leistung bzw. Zunahme des Tierbestandes resultieren. Im gleichen Sinne ergibt sich eine bessere Futterverwertung bzw. ein geringerer Bedarf an Erhaltungsfutter.

Die verbesserte regelungs- und gerätetechnische Auslegung hilft aber auch, Energie einzusparen, da bei angepaßter Regelung des Klimazustandes auch überschüssige Heiz-, Lüftungs- und ggf. Kühlleistungen vermeidbar sind. Schließlich ergeben sich mit der komplexeren Erfassung des Stallklimas auch Vorteile eines einfacheren und sichereren Stallbetriebes, in dem weitgehend ausgeschlossen werden kann, daß die Tierhaltung unbemerkt irgendwelche kritischen Werte überschreitet,zumal sich hier auch eine Fernübertragung, die mit mehreren Meßgrößen ein repräsentatives Bild des Stallklimas geben kann, zur bequemen Überwachung anbietet. Diese kann dann z.B. zentral für mehrere große Ställe erfolgen, so daß sich hier wesentliche Arbeitsersparnisse ergeben.

Patentansprüche:

1.      Stallklimaanlage mit mehreren Meßwertgebern für verschiedene Klima-Meßgrößen, mehreren verschiedenartige Stellgrößen liefernden Stellgliedern und zumindest einem Regler für die meßgrößenabhängige Stellglied-Aussteuerung, dadurch gekennzeichnet, daß mehrere verschiedene Klima-Meßgrößen zu dem bzw. zumindest einem der Regler (17) zusammengeführt und in diesem zur Bildung zumindest eines kombinierten Klimawertes verknüpft sind, aufgrund dessen der Regler (17) verschiedene Stellsignale an die Stellglieder (8,9,10,11) ausgibt.

2.      Stallklimaanlage nach Anspruch 1, dadurch gekennzeichnet, daß die Meßwertgeber zumindest einen Temperaturgeber (12) für die Stalluft und zumindest einen Temperaturgeber für eine Stallinnenwand (14) umfassen, deren Meßwerte im Regler (17) miteinander kombiniert werden.

3.      Stallklimaanlage nach Anspruch 1 oder 2, dadurch gekennzeichnet, daß die Meßwertgeber zumindest einen Feuchtegeber (13) für die Stalluftfeuchte umfassen.

4.      Stallklimaanlage nach Anspruch 1,2 oder 3, dadurch gekennzeichnet, daß die Meßwertgeber zumindest einen Feuchtegeber (16) für die Außenluft umfassen.

5.      Stallklimaanlage nach einem der Ansprüche 1 bis 4, dadurch gekennzeichnet, daß die Meßwertgeber einen Temperaturgeber (15) für die Außenluft umfassen.

6.      Stallklimaanlage nach einem der Ansprüche 1 bis 5, dadurch gekennzeichnet, daß die Meßwertgeber zumindest einen auf die Ionenkonzentration in der Stalluft ansprechenden Geber umfassen.

7.    Stallklimaanlage nach einem der Ansprüche 1 bis 6, dadurch gekennzeichnet, daß die Meßwertgeber zumindest einen auf licht oder elektrische Strahlung ansprechenden Meßwertgeber umfassen.

8.    Stallklimaanlage nach einem der Ansprüche 1 bis 7, dadurch gekennzeichnet, daß die Meßwertgeber einen Luftdruckgeber umfassen.

9.    Stallklimaanlage nach einem der Ansprüche 1 bis 8, dadurch gekennzeichnet, daß die Meßwertgeber ein Mikrofon für die Stallgeräusche umfassen.

10.    Stallklimaanlage nach einem der Ansprüche 1 bis 9, dadurch gekennzeichnet, daß die Meßwertgeber zumindest einen Windmesser für Luftbewegung innerhalb des Stalles umfassen.

11.    Stallklimaanlage nach einem der Ansprüche 1 bis 10, dadurch gekennzeichnet, daß der Regler (17) mit einer Eingabeeinrichtung (19) verbunden ist, welche Bedieneinrichtungen zur Eingabe stationärer, für den Stall und seinen Besatz typischer Werte und nachgeschaltete Umsetzeinrichtungen zur Beeinflussung des Reglers (17) in Abhängigkeit von den eingegebenen Werten enthält.

12.    Stallklimaanlage nach Anspruch 11, dadurch gekennzeichnet, daß die Eingabeeinrichtung zur Eingabe des Gewichts der Tiere im Stall und zur Umsetzung des Tiergewichts im Sinne einer Klimaeinstellung ausgestattet ist.

13.    Stallklimaanlage nach einem der Ansprüche 1 bis 12, dadurch gekennzeichnet, daß die verschiedenen Meßwerte zumindest zum Teil zur Fernüberwachung (21) von der Stallklimaanlage abgenommen und zu einem gesonderten Gebäude übertragen sind.

0067979

FIG 1

Europäisches
Patentamt

**EUROPÄISCHER RECHERCHENBERICHT**

**0067979**
Nummer der Anmeldung

EP 82 10 4760.2

| Kategorie | EINSCHLÄGIGE DOKUMENTE Kennzeichnung des Dokuments mit Angabe, soweit erforderlich, der maßgeblichen Teile | betrifft Anspruch | KLASSIFIKATION DER ANMELDUNG (Int. Cl.³) |
|---|---|---|---|
| P,X | LANDTECHNIK, Band 37, Nr. 2, Februar 1982 Lehrte H. SEUFERT et al. "Stallklimaoptimie- rung mit Hilfe von Prozeßrechnern" Seiten 98 bis 100 * ganzes Dokument * | 1 | F 24 F 11/00 A 01 K 1/00 |
| X | GB - A - 1 205 895 (POTTER & SONS LTD.) * Seite 1, Zeile 68 bis Seite 2, Zeile 17 * | 1 | **RECHERCHIERTE SACHGEBIETE (Int. Cl.³)** |
| A | US - A - 3 181 791 (AXELROD) * Spalte 1, Zeilen 17 bis 20; Fig. 2 * | 1 | A 01 K 1/00 F 24 F 11/00 |
| A | DE - B2 - 2 241 749 (HAWKER SIDDELEY DYNAMICS LTD.) * Spalte 7, Zeile 51 bis Spalte 8, Zeile 10; Spalte 9, Zeile 10 bis Spalte 10, Zeile 20; Fig. 7 * | 1,3-5, 8 | |
| A | DE - A - 1 604 176 (GEBR. GYSI AG) * Fig. 1 * | 1,7 | **KATEGORIE DER GENANNTEN DOKUMENTE** X: von besonderer Bedeutung allein betrachtet Y: von besonderer Bedeutung in Verbindung mit einer anderen Veröffentlichung derselben Kategorie A: technologischer Hintergrund O: nichtschriftliche Offenbarung P: Zwischenliteratur |
| A | DE - A - 2 105 310 (HONEYWELL INC.) * Fig. 1 * | 13 | T: der Erfindung zugrunde lie- gende Theorien oder Grund- sätze E: älteres Patentdokument, das jedoch erst am oder nach dem Anmeldedatum veröffentlicht worden ist D: in der Anmeldung angeführtes Dokument L: aus andern Gründen ange- führtes Dokument |

X Der vorliegende Recherchenbericht wurde für alle Patentansprüche erstellt.

&: Mitglied der gleichen Patent- familie, übereinstimmendes Dokument

| Recherchenort | Abschlußdatum der Recherche | Prüfer |
|---|---|---|
| Berlin | 13-09-1982 | PIEPER |